# EUROPÄISCHE PATENTSCHRIFT

(11) **EP 0 728 936 B1**
(45) Veröffentlichungstag und Bekanntmachung des Hinweises auf die Patenterteilung: **03.05.2000**
(21) Anmeldenummer: 95119437.2
(22) Anmeldetag: 09.12.1995
(51) Int. Cl.: F02M 35/08, B01D 46/42

(54) **Anzeigevorrichtung zur Anzeige des Unterdrucks**
Display device adapted to display the vacuum
Dispositif d'affichage pour afficher la dépression

(30) Priorität: 24.02.1995 DE 19506452
(43) Veröffentlichungstag der Anmeldung: 28.08.1996
(73) Patentinhaber: FILTERWERK MANN & HUMMEL GMBH, 71631 Ludwigsburg (DE)
(72) Erfinder: Brockhoff, Franz-Ulrich, D-49191 Belm (DE); Kochert, Stefan, D-71384 Weinstadt (DE); Mössinger, Klaus, D-71482 Obersulm (DE)
(74) Vertreter: Voth, Gerhard, Dipl.-Ing.

(56) Entgegenhaltungen:
- DE-B- 1 207 706
- DE-U- 1 988 414
- US-A- 3 939 457
- US-A- 4 369 728

## Beschreibung

Die Erfindung betrifft eine Anzeigevorrichtung zur Anzeige des Unterdrucks nach dem Oberbegriff des Hauptanspruchs.

Eine solche Anzeigevorrichtung ist beispielsweise aus der US-PS 43 69 728 bekannt. Diese dient zur Anzeige des Verschmutzungsgrades eines Luftfilters an einer Brennkraftmaschine. Solche Anzeigevorrichtungen arbeiten normalerweise mit dem Unterdruck der auf der Reinluftseite des Luftfilters herrscht. Dieser Unterdruck bewirkt ein Verstellen einer Membran. Bei der Erhöhung des Verschmutzungsgrades des Luftfilters steigt selbstverständlich der Unterdruck an. Dieses wird von der Anzeigevorrichtung sensiert und in eine Anzeigeposition umgesetzt.

Ein Nachteil dieses bekannten Systems liegt darin, daß aufgrund der Gestaltung der Membran und des Kolbens eine geringe Genauigkeit erzielt wird. Außerdem besteht die Gefahr, daß das Rastelement den Kolben verkantet, welches ein Verklemmen des Kolbens bewirkt.

Es ist weiterhin aus der US-PS 39 39 457 eine Anzeigevorrichtung bekannt, bei der ebenfalls ein Kolben an einer Membran befestigt ist. Das Rastelement ist in Form einer federbelasteten Kugel ausgestaltet und rastet in der Endstellung in eine entsprechende Ausnehmung einer Führungsfläche ein.

Ein Nachteil dieser Anzeigevorrichtung ist darin zu sehen, daß Zwischenwerte nicht angezeigt werden können, da der Kolben bei fehlendem Unterdruck wieder in die Ausgangslage zurückweicht.

Aus der US 4 369 728 ist eine Anzeigevorrichtung bekannt. Diese weist ein sägezahnförmiges Element auf, welches einen Kolben in bestimmten Anzeigestellungen abstützt. Ein Nachteil dieser Anzeigevorrichtung ist darin zu sehen, daß der Kolben in jeder Anzeigestellung eine schräge Lage einnimmt, welche durch das sägezahnförmige Element verursacht wird. Dies kann zum Verklemmen des Kolbens führen und damit zu einer völlig falschen Anzeige des anliegenden Unterdrucks.

Der Erfindung liegt die Aufgabe zugrunde, eine Anzeigevorrichtung zu schaffen, die eine sehr hohe Genauigkeit aufweist und zuverlässig arbeitet sowie Zwischenwerte anzeigt. Diese Aufgabe wird ausgehend von dem Oberbegriff des Hauptanspruchs durch dessen kennzeichnenden Merkmale gelöst.

Der wesentliche Vorteil der Erfindung ist die Verwendung einer Rollmembran. Diese Rollmembran zeigt über den gesamten Anzeigebereich eine sehr hohe Genauigkeit, ist einerseits robust aufgebaut, andererseits hat sie den Vorteil des geringen Platzbedarfs.

Eine Weiterbildung der Erfindung sieht vor, das Rastelement radialsymmetrisch auszugestalten. Damit wird ein Verkanten des Kolbens oder eine Schräglage im Anzeigebereich wirksam verhindert.

In einer weiteren Ausgestaltung der Erfindung ist die Rollmembran zwischen der Zylinderfläche des Kolbens und der Innenwand des Gehäuses angeordnet. Dort steht ein Ringspalt zur Verfügung, der zwar nur eine geringe Spaltbreite aufweist, der aber trotzdem für die Aufnahme der Rollmembran geeignet ist. Die Rollmembran ist zwischen dem zylinderförmigen Gehäuse und dem Deckel eingespannt. Deckel und Gehäuse sind entweder miteinander verrastet oder ultraschallverschweißt. Da die Rollmembran an ihrem äußeren Ende gleichzeitig noch eine Dichtfunktion ausübt, wird ein Eindringen von Staub oder Schmutz zwischen Deckel und Gehäuse wirksam verhindert.

Zur optischen Darstellung des Anzeigewertes weist das Gehäuse wenigstens ein Sichtfenster auf. Selbstverständlich besteht auch die Möglichkeit, das Gehäuse aus einem glasklaren Kunststoffmaterial, zum Beispiel PA 6 herzustellen. Damit ist eine allseitige Kontrolle und somit eine Anzeige des Unterdruckwertes in einfacher Weise möglich.

Zur Rückstellung der Anzeigevorrichtung auf die Null-Stellung ist in vorteilhafter Weise auf dem Deckel eine Druckfläche oder ein Druckpunkt angeordnet. Bei der manuellen Betätigung dieses Druckpunktes spreizt sich das Rastelement und gibt den Kolben frei, der sich aufgrund der Federwirkung in seine Ausgangslage zurückstellt.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ausführungsbeispiele der Erfindung sind in den Zeichnungen dargestellt und werden im folgenden näher erläutert. Die Zeichnungen zeigen:
- Figur 1: die Schnittdarstellung einer Anzeigevorrichtung,
- Figur 2: eine Draufsicht.

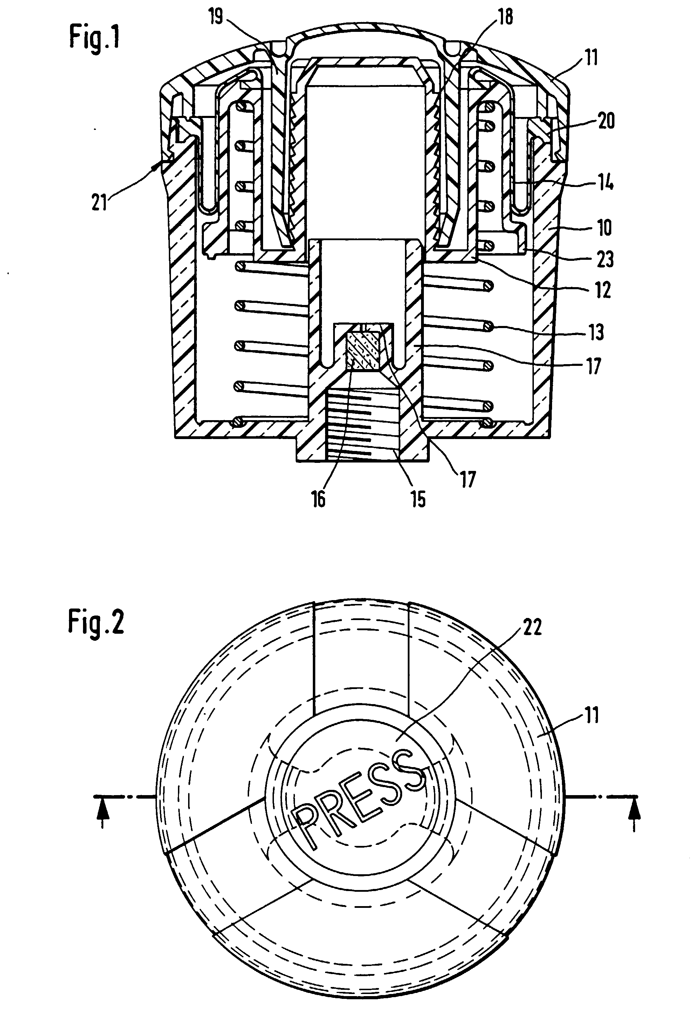

Die Anzeigevorrichtung gemäß Figur 1 besteht aus einem Gehäuse 10, einem Deckel 11, einem im Gehäuse angeordneten Kolben 12, einer Rückstellfeder 13 sowie einer Rollmembran 14. Die Anzeigevorrichtung wird über den Gewindeanschluß 15 an eine Unterdruckquelle angeschlossen. Die Anschlußöffnung ist mit einem Filterelement 16 versehen, das den Eintritt von Verunreinigungen über die Öffnung 17 verhindert. Der Kolben 12 ist an einer zylindrischen Fläche 17 des Gehäuses 10 geführt. Der Kolben weist an der Oberfläche des mittleren Bereichs sägezahnförmige Rastnasen 18 auf, der Deckel ist mit zwei oder mehreren Rastfingern 19 ausgestattet. An dem Kolben 12 ist im oberen Bereich die Rollmembran 14 befestigt. Die äußere Befestigung der Rollmembran befindet sich in der Trennebene zwischen Deckel 11 und Gehäuse 10. Hier ist die Rollmembran mit einer Verdickung 20 versehen und bewirkt aufgrund der örtlichen Ausgestaltung des Deckels 11 und des Gehäuses 10 eine Abdichtung zwischen diesen beiden Teilen. Der Deckel ist mittels Rastelementen 21 auf dem Gehäuse aufgeschnappt.

Gemäß Figur 2 ist der Deckel mit einer Druckfläche 22 versehen. Eine manuelle Betätigung dieser Fläche, das heißt ein Eindrücken, bewirkt ein Spreizen der Rastfinger 19 und damit ein Lösen des Kolbens, der in die in Figur 1 gezeigte Ausgangslage zurückbewegt wird. Liegt ein Unterdruck über dem Anschluß 15 an der Anzeigevorrichtung, so bewegt sich der Kolben 12 nach unten und verharrt auch bei Wegnahme des Unterdrucks in der einmal eingenommenen Stellung. Der Kolben 12 ist an der Ringfläche 23 mit einer Sichtmarkierung versehen. Das Gehäuse 10 besteht aus einem durchsichtigen Kunststoffwerkstoff. Damit läßt sich die Stellung des Kolbens leicht erkennen. Selbstverständlich besteht auch die Möglichkeit, eine elektrische Abtasteinrichtung innerhalb oder außerhalb des Gehäuses anzuordnen. Diese Abtasteinrichtung sensiert die Stellung des Kolbens und erzeugt ein proportionales elektrisches Signal welches entsprechend weiterverarbeitet werden kann.

### Bezugszeichenliste

- 10: Gehäuse
- 11: Deckel
- 12: Kolben
- 13: Rückstellfeder
- 14: Rollmembran
- 15: Gewindeanschluß
- 16: Filterelement
- 17: Führungsfläche
- 18: Rastnasen
- 19: Rastfinger
- 20: Verdickung
- 21: Rastelement
- 22: Druckfläche

## Patentansprüche

1. Anzeigevorrichtung zur Anzeige des Unterdrucks, insbesondere zur Anzeige des Unterdrucks auf der Reinluftseite eines Luftfilters für eine Brennkraftmaschine, bestehend aus einem im wesentlichen zylinderförmigen Gehäuse (10), einem im Gehäuse (10) angeordneten, verschiebbar gelagerten Kolben (12) und eine auf den Kolben (12) kraftausübende Feder (13), wobei ein Rastelement (18, 19) zum Einrasten des Kolbens (12) in einer Vielzahl von Stellungen vorgesehen ist, zwischen Kolben (12) und Gehäuse (10) eine Rollmembran (14) angeordnet ist, dadurch gekennzeichnet, daß das Rastelement (18, 19) radialsymmetrisch ausgestaltet ist.

2. Anzeigevorrichtung nach Anspruch 1, dadurch gekennzeichnet, daß die Rollmembran (14) zwischen einer zylinderförmigen Fläche des Kolbens (12) und der Innenwand des Gehäuses (10) verläuft.

3. Anzeigevorrichtung nach einem der vorherigen Ansprüche, dadurch gekennzeichnet, daß das Gehäuse (10) wenigstens ein Sichtfenster zur Ermittlung der Position des Kolbens (12) aufweist.

4. Anzeigevorrichtung nach einem der vorherigen Ansprüche, dadurch gekennzeichnet, daß auf dem Deckel (11) des Gehäuses ein Druckpunkt vorgesehen ist zum Aufspreizen des Rastelements (19) und Zurückstellen des Kolbens (12).

## Claims

1. Display apparatus for indicating the reduced pressure, more especially for indicating the reduced pressure on the filtered air side of an air filter for an internal combustion engine, comprising a substantially cylindrical housing (10), a displaceably mounted piston (12), which is disposed in the housing (10), and a spring (13), which exerts force upon the piston (12), a locking device (18, 19) being provided for locking the piston (12) in a plurality of positions, and a rolling diaphragm (14) being disposed between piston (12) and housing (10), characterised in that the locking device (18, 19) has a radially symmetrical configuration.

2. Display apparatus according to claim 1, characterised in that the rolling diaphragm (14) extends between a cylindrical face of the piston (12) and the internal wall of the housing (10).

3. Display apparatus according to one of the previous claims, characterised in that the housing (10) has at least one inspection window for determining the position of the piston (12).

4. Display apparatus according to one of the previous claims, characterised in that a pressure point is provided on the cover (11) of the housing for expanding the locking device (19) and resetting the piston (12).

## Revendications

1. Dispositif d'affichage pour afficher la dépression notamment celle du côté de l'air filtré d'un filtre à air de moteur à combustion interne, comprenant :
- un boîtier (10) essentiellement cylindrique,
- un piston (12) monté de manière coulissante dans le boîtier (10) et un ressort (13) exerçant une force sur le piston (12),
- un élément d'accrochage (18, 19) pour accrocher le piston (12) dans plusieurs positions,
- une membrane à déroulement (14) entre le piston (12) et le boîtier (10),
caractérisé en ce que
l'élément d'accrochage (18, 19) présente une symétrie radiale.

2. Dispositif d'affichage selon la revendication 1,
caractérisé en ce que
la membrane à déroulement (14) passe entre une surface cylindrique du piston (12) et la paroi intérieure du boîtier (10) .

3. Dispositif d'affichage selon l'une des revendications précédentes,
caractérisé en ce que
le boîtier (10) comporte au moins une fenêtre pour déterminer la position du piston (12).

4. Dispositif d'affichage selon l'une des revendications précédentes,
caractérisé par
un point de pression prévu sur le couvercle (11) du boîtier, pour écarter l'élément d'accrochage (19) et rappeler le piston (12).
